# FASCICULE DE BREVET EUROPEEN

(11) **EP 2 956 292 B1**
(45) Date de publication et mention de la délivrance du brevet: **24.05.2017**
(21) Numéro de dépôt: 14708634.2
(22) Date de dépôt: 14.02.2014
(51) Int. Cl.: B29C 65/18, B29C 65/30, B29C 65/76, B29C 65/78, B29C 65/00, B65B 61/02, B65B 61/06, B65B 9/04, B29C 65/02, B29L 31/00, B65D 21/02, B29K 23/00

(54) **CONDITIONNEMENT D'UN GROUPE D'AU MOINS DEUX RÉCIPIENTS EN MATIÈRE PLASTIQUE**
VERPACKUNG VON EINER GRUPPE MIT MINDESTENS ZWEI KUNSTSTOFFBEHÄLTERN
PACKAGING OF A GROUP OF AT LEAST TWO CONTAINERS MADE OF PLASTIC MATERIAL

(30) Priorité: 15.02.2013 FR 1351309
(43) Date de publication de la demande: 23.12.2015
(73) Titulaire: ERCA, 91940 Les Ulis (FR)
(72) Inventeur: SCHWAB, Dominique, F-78000 Versailles (FR); KERVAZO, Michel, F-85230 Saint Gervais (FR); DUNAN, Alain, F-91450 Etiolles (FR)
(74) Mandataire: Intès, Didier Gérard André
(86) Numéro de dépôt international: PCT/FR2014/050297
(87) Numéro de publication internationale: WO 2014/125224

(56) Documents cités:
- EP-A1- 0 050 083
- FR-A1- 2 449 604
- FR-A1- 2 532 240

## Description

La présente invention concerne un procédé de fabrication de récipients, dans lequel on fournit un groupe d'au moins deux récipients en matière plastique, chaque récipient ayant un corps et un rebord.

Il est connu de conditionner des récipients en matière plastique par groupes de plusieurs récipients. Il s'agit en particulier de récipients contenant un produit alimentaire, tel qu'un yaourt, une compote ou analogue. Selon une première option, les récipients sont détachés les uns des autres, mais ils sont groupés dans un même emballage, par exemple une boîte ou un banderolage qui les maintient les uns par rapport aux autres. Dans ce cas, pour consommer le contenu des récipients, l'utilisateur doit les extraire de la boîte ou bien enlever le banderolage. Le conditionnement est relativement couteux, puisqu'il nécessite un élément extérieur (boîte ou banderolage). D'autre part, les manipulations demandées à l'utilisateur sont relativement exigeantes puisque, par exemple, une fois le banderolage supprimé, les récipients sont dégroupés et ne peuvent plus être manipulés comme un tout. De plus, la boîte ou le banderolage constituent des déchets.

Pour éliminer ces inconvénients, il est connu de fabriquer des récipients liés entre eux par leurs rebords.

Des dispositifs pour relier des récipients en matière plastique par leurs rebords sont connus, par exemple, par les documents brevet FR 2 532 240 A1, DE 199 21 033 A1, et EP 0 050 083 A1. Avec de tels dispositifs, on relie entre eux des récipients fabriqués séparément par thermoformage ou par injection.

Une autre possibilité, illustrée par exemple dans le document brevet FR 2 449 604 A1, est de thermoformer les récipients à partir d'une même feuille de matière plastique, leurs rebords restant sensiblement dans le plan initial de la feuille. Par exemple, comme le propose le document FR 2 449 604 A1, les récipients sont fabriqués à partir d'une même feuille entrainée en pas à pas en étant dévidée à partir d'une bobine. Dans un autre exemple, les récipients sont fabriqués par groupes, chaque groupe étant réalisé dans une feuille ou plaquette de matière plastique. Les récipients sont éventuellement séparés en sortie de la ligne de fabrication.

Dans un autre exemple, les récipients restent groupés, et, pour faciliter la séparation des récipients les uns par rapport aux autres, des entailles sont pratiquées dans les zones de délimitation de ces rebords.

On obtient ainsi, de manière économique, des récipients groupés facilement utilisables. En revanche, la difficulté est de parvenir à rompre les lignes de liaison entre les rebords. Ceci conduit à faire le choix, pour la matière thermoplastique, d'un matériau à la fois thermoformable et aisément sécable. Pour cette raison, de tels récipients sont en général fabriqués en polystyrène. Or, le polystyrène est relativement coûteux et présente une certaine nocivité environnementale, ne serait-ce que parce qu'il est difficilement recyclable. Cependant, d'autres matériaux présentant les propriétés requises pour former des récipients, par exemple aptes à contenir des matériaux alimentaires, n'ont pas nécessairement cette aptitude à se rompre facilement lorsqu'ils sont entaillés. C'est par exemple le cas du polypropylène.

Pour cette raison, l'invention vise à proposer un procédé de formage, de remplissage et de scellage de récipients, selon lequel les récipients peuvent être groupés en étant liés entre eux, tout en permettant une rupture aisée de cette liaison, même si le matériau n'est pas en lui-même sécable facilement comme c'est le cas du polystyrène.

Ainsi, l'invention concerne un procédé de formage, de remplissage et de scellage d'un groupe d'au moins deux récipients en matière plastique, dans lequel, à partir d'une même feuille de matière plastique, on thermoforme des récipients ayant chacun un corps et un rebord qui délimite une ouverture, on remplit les récipients, on ferme les récipients en posant des couvercles en travers de leurs ouvertures, on sépare les récipients en les découpant individuellement dans la feuille, et après avoir séparé les récipients, on dispose les récipients du groupe adjacents de telle sorte que des tronçons de leurs rebords respectifs soient en regard et délimitent entre eux une ligne de séparation entre les récipients adjacents et on réalise, sur la ligne de séparation, au moins un point de soudure formant une liaison sécable entre les tronçons de rebords en regard.

Ainsi, par rapport à un procédé de fabrication classique de thermoformage de récipients dans du matériau tel que du polystyrène, on ne se contente pas de réaliser des entailles entre les rebords des récipients adjacents, mais on découpe ces rebords de manière à séparer totalement les récipients des uns des autres. Puis, selon le procédé, on réalise un ou plusieurs points de soudure sur des lignes de séparation entre les récipients adjacents que l'on souhaite grouper.

Avec l'invention, on fait le choix de disposer initialement des récipients séparés les uns des autres tout en les plaçant de telle sorte que des tronçons de leurs rebords soient en regard et, en pratique, à touche-touche, la distance entre les rebords en regard étant pratiquement nulle. Par exemple, les récipients peuvent être réalisés par thermoformage dans une même feuille de matériau thermoplastique, mais être séparés les uns des autres par découpe dans cette feuille.

L'invention fait le choix, partant de récipients initialement fabriqués en groupes puis séparés, de réaliser un ou plusieurs points de soudure entre eux. S'intéressant en particulier au cas de récipients thermoformés dans une même feuille en polypropylène, la demanderesse a constaté que de tels points de soudure sont plus aisément sécables que ne le seraient des liaisons préservées dans la feuille après une simple découpe partielle selon des portions des contours des rebords de récipients. Au sens de la présente description, le terme « sécable » est utilisé pour qualifier la possibilité de provoquer une rupture sans outil et en mettant en oeuvre une faible force manuelle. Le terme « rupture » s'entend dans le même sens.

Au sens de la présente invention, par "point de soudure", on comprend une zone très localisée, de petite longueur comparée à celle des contours des rebords.

Selon un mode de réalisation, le rebord de chaque récipient délimitant une ouverture, on réalise ledit au moins un point de soudure sur la ligne de séparation entre les récipients adjacents, à partir des faces des rebords desdits récipients qui sont opposées à leurs ouvertures.

Pour séparer les récipients ayant une ouverture, on a tendance à les faire basculer l'un par rapport à l'autre en rapprochant l'une de l'autre leurs ouvertures respectives. La demanderesse a constaté qu'en réalisant le point de soudure à partir de la face des bords opposée à l'ouverture, on soumet ce point de soudure à des efforts de traction maximisés lors de ce basculement, de sorte que la rupture est facilitée. De plus, le point de soudure est peu ou pas visible depuis la face où se trouve l'ouverture, qui est en général la face la plus visible. En outre, si les ouvertures des récipients sont fermées par un couvercle ou un opercule au moment où le point de soudure est réalisé, la présence de ce couvercle ou opercule ne gêne pas la réalisation du point de soudure.

Selon un mode de réalisation, le point de soudure s'étend sur une partie seulement de l'épaisseur des rebords en regard.

On fait ainsi en sorte que, lorsqu'on cherche à séparer deux récipients adjacents en les basculant l'un vers l'autre, les bords de leurs rebords respectifs situés au droit du ou des points de soudure puissent servir de point d'appui formant un axe de levier qui facilite la rupture du point de soudure.

Selon un mode de réalisation, le point de soudure est réalisé par fusion locale de la matière plastique.

Ainsi, la soudure est réalisée sans apport de matière extérieure, et de manière très simple et économique.

Selon un mode de réalisation, la matière plastique comprend du polypropylène.

Le polypropylène présente un avantage sur le plan économique et environnemental. Grâce à l'invention, on parvient à réaliser des récipients groupés en polypropylène, tout en permettant la séparation de ces récipients par rupture du ou des points de soudure qui les lient.

Selon un mode de réalisation, les couvercles sont des opercules apposés sur les ouvertures des récipients à partir d'une bande continue, et les opercules sont découpés lors de la séparation des récipients.

L'invention concerne également une installation de formage, de remplissage et de scellage de récipients.

Comme indiqué au début du présent texte, on connait la possibilité de grouper des récipients initialement séparés, en les mettant dans une boîte ou en les enveloppant dans une banderole. Selon un autre art antérieur, on connait la possibilité de maintenir des liaisons entre les rebords des récipients adjacents, en délimitant ces rebords uniquement par des entailles partielles de la matière plastique. Compte tenu des inconvénients précités de cet art antérieur, l'invention vise à proposer une installation qui permet d'obtenir des liaisons sécables entre des récipients groupés de manière simple et économique.

Ainsi, l'installation de formage, de remplissage et de scellage de récipients selon l'invention comprend un poste de thermoformage apte à thermoformer, à partir d'une feuille de matière plastique, des récipients ayant chacun un corps et un rebord délimitant une ouverture, ainsi qu'un convoyeur pour convoyer les récipients thermoformés par groupes d'au moins deux récipients adjacents liés par une partie de la feuille, un poste de remplissage des récipients, un poste de fermeture des récipients et un poste de découpe apte à découper les récipients individuellement dans ladite feuille pour les séparer, et l'installation comprend, en aval du poste de découpe des récipients dans le sens de convoyage des récipients, des moyens pour disposer les récipients du groupe adjacents, de telle sorte que des tronçons de leurs rebords respectifs soient en regard et délimitent entre eux une ligne de séparation entre les récipients adjacents et l'installation comprend également un outil de soudure apte à réaliser, sur la ligne de séparation, au moins un point de soudure formant une liaison sécable entre les rebords en regard.

Ainsi, l'installation de l'invention permet de réaliser un ou plusieurs points de soudure entre les rebords en regard des récipients adjacents initialement séparés, pour permettre de les relier de manière sécable. L'outil de soudure est intégré dans une installation de type « Form-Fill-Seal », ce qui signifie formage, remplissage et fermeture des récipients. Il ne constitue qu'un poste simple à mettre en place, sans surcoût important.

Selon un mode de réalisation, l'installation comprend au moins une électrode de soudure et des moyens pour appliquer cette électrode aux faces des rebords des récipients opposées à leurs ouvertures.

Selon un mode de réalisation, l'installation de récipients comprend au moins deux électrodes de soudure espacées.

Selon un mode de réalisation, l'installation comprend des moyens pour maintenir les groupes de récipients séparés de telle sorte que, pour chaque groupe, les rebords en regard des récipients soient accessibles par leurs faces opposées aux ouvertures des récipients.

Selon un mode de réalisation, les couvercles sont des opercules apposés sur les ouvertures des récipients à partir d'une bande continue, et le poste de découpe est apte à découper les opercules lors de la séparation des récipients.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre schématiquement une installation de fabrication de récipients, comprenant le dispositif de l'invention et permettant de mettre en oeuvre le procédé de l'invention ;
- la figure 2 montre deux récipients groupés, lors de la réalisation d'un point de soudure sur les lignes de séparation entre ces récipients ;
- la figure 3 est une vue de dessus d'un groupe de quatre récipients obtenu conformément à l'invention ;
- la figure 4 est un agrandissement montrant des points de soudure entre les rebords en regard de deux récipients ;
- la figure 5A est une vue de dessous d'une partie du dispositif de conditionnement ;
- la figure 5B est une vue en coupe selon la ligne VB-VB de la figure 5A ;
- la figure 6 montre en détail la zone de la jonction entre des rebords de deux récipients adjacents réalisée par un point de soudure selon l'invention, dans la situation de transport ou de stockage de ces récipients ; et
- la figure 7 est une vue correspondant à celle de la figure 6, au moment où l'on sépare deux récipients adjacents.

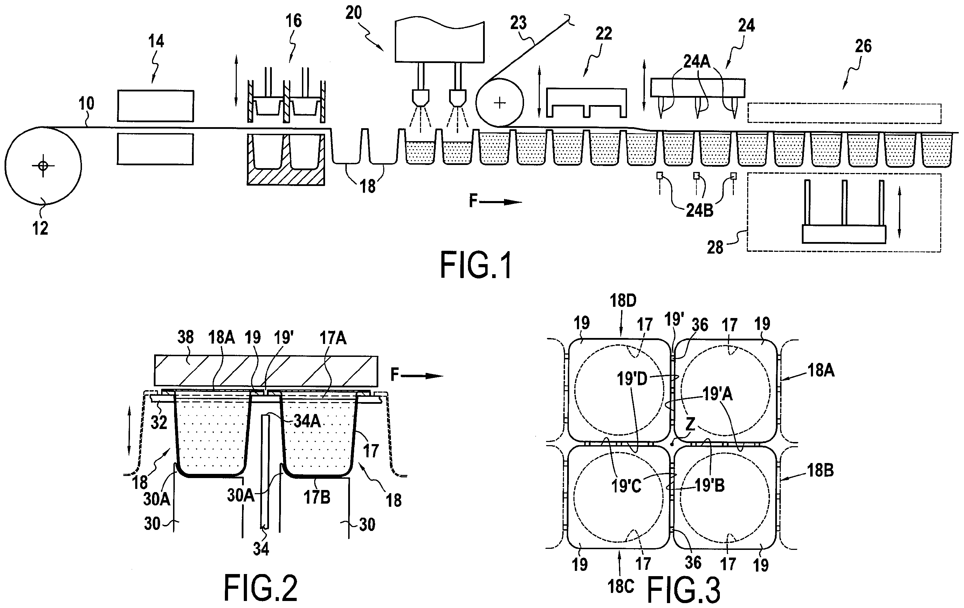

On décrit tout d'abord l'installation de fabrication de récipients schématisée sur la figure 1. Cette installation comprend, disposés successivement dans le sens F d'avancement d'une bande 10 de matériau thermoplastique dévidée à partir d'une bobine 12, un poste de chauffage 14 dans lequel le matériau thermoplastique est porté à une température permettant sa déformation plastique, un poste de thermoformage 16 dans lequel, à partir de la bande thermoplastique 10, des récipients 18 sont thermoformés, un poste 20 de remplissage des récipients, un poste 22 de fermeture des récipients, un poste 24 de découpe des récipients et un dispositif de conditionnement 26.

Dans l'exemple représenté, les récipients sont thermoformés à partir d'une bande 10 continue. Au sens de la présente description, on considérera, de manière générale, que les récipients sont thermoformés à partir d'une feuille de matière thermoplastique. Cette feuille peut prendre la forme d'une bande continue telle que représentée à la figure 1, ou bien d'une plaquette dans laquelle les récipients sont thermoformés individuellement ou par groupes. Bien entendu, si les récipients sont thermoformés individuellement, le poste de découpe 24 n'est pas toujours nécessaire sauf, éventuellement, pour découper les opercules de fermeture des récipients si, comme dans l'exemple de la figure 1, ces opercules sont apposés sur les ouvertures des récipients à partir d'une bande continue 23.

Les récipients sont en particulier aptes à contenir un produit alimentaire, de type yaourt, compote ou analogue. Ainsi, le poste de remplissage 20 injecte un tel produit dans les récipients, dans les proportions souhaitées.

Bien que la figure 1 montre, dans le poste 22, la fermeture des récipients à partir d'une bande 23 continue, on pourrait bien entendu prévoir d'autres types de postes de fermeture, par exemple des postes apposant des couvercles individuels en travers des ouvertures de la section.

Le poste de découpe 24 comprend, de manière classique, des couteaux 24A et un contre-outil de découpe 24B qui coopère avec la face des rebords des récipients qui est opposée aux couteaux 24A. En effet, comme on le voit mieux sur les figures 2 et 3, les récipients 18 comprennent un corps 17 et un rebord 19. En général, le rebord est situé dans le plan de la feuille dans laquelle les récipients sont thermoformés, la matière n'étant pratiquement pas étirée dans cette zone lors du thermoformage.

En sortie du poste de découpe 24, les récipients sont convoyés vers le dispositif de conditionnement 26 par un convoyeur 28 apte à les convoyer individuellement. Par exemple, on utilise un convoyeur de type « à pas-de-pèlerin ». De manière classique, un tel convoyeur comprend, d'une part, des moyens de support pour les récipients et, d'autre part, des moyens de transport, qui saisissent les récipients et les entrainent selon un pas d'avancement pour les redéposer sur des supports disposés dans une région aval.

A titre d'exemple, sur la figure 2, sont représentés des plots de transport 30 sur lesquels peuvent reposer des fonds 17B des récipients opposés à leurs ouvertures 17A. En l'espèce, ces plots présentent des talons 30A qui remontent légèrement contre les parois latérales amont des récipients pour que, en avançant dans le sens F vers l'aval, les plots entrainent les récipients qu'ils portent. Dans cet exemple, les supports sont formés par des rails 32 parallèles au sens d'avancement F, sur lesquels reposent les rebords des récipients. Le rail central 32 devant être traversé par des électrodes 34 pour que celles-ci puissent se rapprocher des rebords des récipients et remplir leur fonction de soudage, ce rail présente des perçages 33 à travers lesquels passent ces électrodes 34.

Lorsque, comme dans l'exemple de la figure 1, les récipients sont thermoformés à partir d'une bande continue, l'installation peut comporter un premier convoyeur de type à pince ou analogue avançant pas à pas, pour faire avancer la bande 10 comme un tout puis, à partir de la sortie du poste de découpe 24, un convoyeur du type du convoyeur 28, pouvant transporter des récipients individuels, de préférence en les maintenant groupés. A cet égard, le convoyeur à pas-de-pèlerin est un exemple de convoyeur possible. Pour simplifier le dessin, le premier convoyeur n'est pas représenté sur la figure 1.

Sur la figure 2, on comprend que, dans le dispositif de conditionnement 26, des récipients 18 groupés sont disposés de telle sorte que des tronçons de leurs rebords 19 respectifs soient situés en regard en délimitant entre eux une ligne de séparation. Cette disposition est également bien visible sur la figure 3, pour un groupe de quatre récipients, 18A à 18D. On voit en effet que les tronçons 19'A du rebord 19 du récipient 18A sont en regard, respectivement, avec un tronçon 19'B du rebord du récipient 18B et un tronçon 19'D du rebord du récipient 18D. Un autre tronçon 19'B du rebord du récipient 18B est en regard d'un tronçon 19'C du rebord du récipient 18C, dont un autre tronçon 19'C est en regard d'un autre tronçon 19'D du rebord du récipient 18D. Les différents tronçons en regard sont disposés bord à bord, en se touchant ou tout près de se toucher, c'est-à-dire que la largeur de la ligne de séparation 19' entre deux tronçons de rebord en regard extrêmement faible, voire pratiquement négligeable.

Alors que les récipients sont ainsi maintenus, selon l'invention, des points de soudure sont faits de manière à relier entre eux deux récipients dont les tronçons des rebords sont en regard. Dans l'exemple représenté sur la figure 3, pour chaque ligne de séparation entre deux tronçons de rebord en regard, on a réalisé trois points de soudure 36. On pourrait bien entendu prévoir un nombre de points de soudure différent. Il est cependant intéressant d'avoir au moins deux points de soudure espacés selon la ligne de séparation.

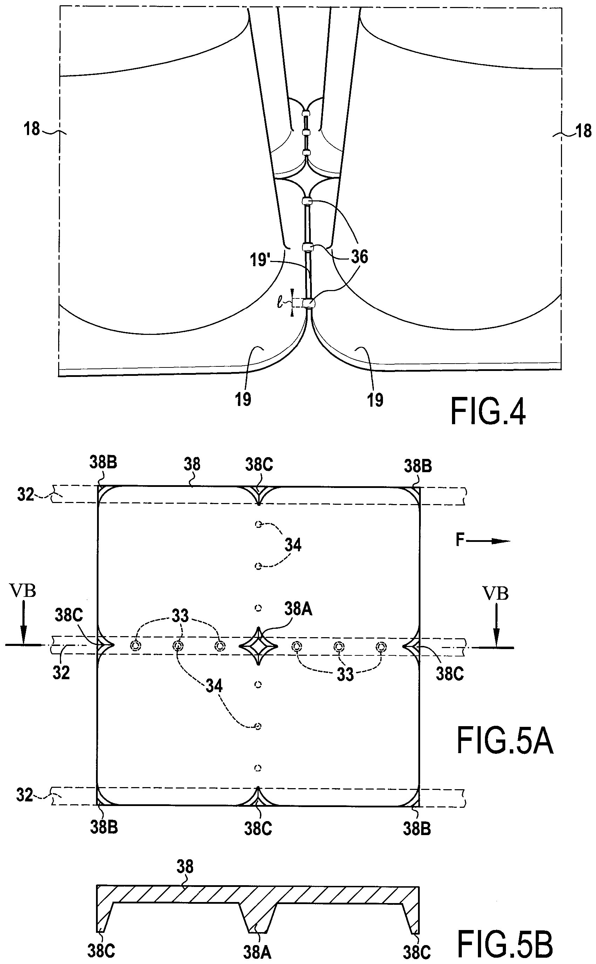

Au sens de la présente invention, un "point de soudure" désigne une zone très localisée, dans laquelle, par une soudure, un pont est établi entre les rebords en regard de deux récipients. La longueur l (voir figure 4) de ces points de soudure, mesurée selon la direction de la ligne de séparation, est faible. Elle est en général comprise entre 1 mm et 12 mm, de préférence entre 2 et 7 mm, encore plus de préférence entre 3 et 5 mm. La surface des zones constituant les points de soudure correspond à la surface de la tête 34A des électrodes de soudure. Elle a par exemple un contour circulaire, ovale ou bien carré ou rectangulaire. La longueur l indiquée ci-dessus peut donc être le diamètre d'une zone de soudure, ou bien sa dimension transversale ou longitudinale. La surface de la zone de soudure peut être avantageusement inférieure à 150 mm², de préférence de l'ordre de 10 à 50 mm².

En référence à la figure 2, on rappelle que, dans l'exemple représenté, le convoyeur 28 comprend, d'une part, des plots de transport 30 et, d'autre part, des supports 32 pour les récipients. On constate sur la figure 2 que le dispositif comprend également une plaque de maintien 38 qui coopère avec les récipients du côté opposé aux plots 30. Ainsi, lorsque les récipients sont maintenus groupés pour être reliés entre eux dans le dispositif de conditionnement, ils sont pris en sandwich entre les plots 30 et la plaque de maintien 38. A ce stade, les électrodes, qui traversent les supports 32 si nécessaire, se rapprochent des rebords des récipients pour réaliser les points de soudure. Dans l'exemple représenté, les points de soudure sont effet réalisés sur les lignes de séparation 19' entre les récipients à partir des faces inférieures des rebords 19, c'est-à-dire à partir des faces de ces rebords qui sont opposés aux ouvertures 17A des récipients, elles-mêmes recouvertes par les couvercles 18A.

Sur la figure 5A, on a représenté la plaque de maintien 38 en vue de dessous. Sa surface inférieure est apte à coopérer avec les faces supérieures des récipients, au moins dans la région des rebords de ces dernier, pour non seulement maintenir les récipients mais également former un contre-outil pour les électrodes 34 de soudure.

De plus, la face inférieure de la plaque 38 peut être aménagée de manière à centrer et caler latéralement les récipients d'un même groupe. A cet effet, cette plaque 38 présente plusieurs organes de centrage. Il s'agit d'une part d'un noyau de centrage 38A qui fait saillie sous la face inférieure de la plaque 38 pour coopérer avec la zone libre Z entre les rebords des quatre récipients adjacents visibles sur la figure 3. Il s'agit d'autre part de rampes de centrage 38B qui sont disposées dans les coins de la plaque 38 et de rampes de centrage 38C qui sont disposées sur les côtés de cette plaque, pour coopérer avec coins des rebords des récipients, situés sur le contour extérieur du groupe de récipients. Sur la coupe de la figure 5B, on voit que les noyaux de centrage 38A et les rampes de centrage 38B et 38C ont des formes qui s'amincissent à mesure que l'on s'éloigne de la face inférieure de la plaque 38, pour faciliter le centrage. Si l'on considère ensemble plusieurs plaques 38 adjacentes, leurs rampes de centrage 38B ou 38C adjacentes forment, considérées ensemble, un noyau de centrage de forme analogue à celle du noyau 38A.

Sur la figure 5A, on voit également les positions des électrodes de soudure 34 et l'agencement des plots de transport 30 et des supports 32. Les plots de transports 30 sont entrainés par tous moyens appropriés, par exemple en étant portés par des vérins permettant leurs déplacements vertical et horizontal. Les plots montent pour venir porter des récipients et les écarter légèrement des supports 32, se déplacent horizontalement pour amener ces récipients au pas suivant, puis descendent pour reposer ces récipients sur les supports et revenir en position initiale, sous d'autres récipients.

Le choix d'un groupe de quatre récipients n'est qu'un exemple, c'est pourquoi le présent texte évoque, de manière générale, un groupe d'au moins deux récipients. Par ailleurs, classiquement, une rangée de récipients transversale à la direction d'avancement F comprend plus de deux récipients, par exemple huit récipients. Ainsi, même pour des groupes de quatre récipients, une plaque de maintien 38 peut couvrir deux récipients dans le sens F et couvrir toute la rangée dans le sens transversal.

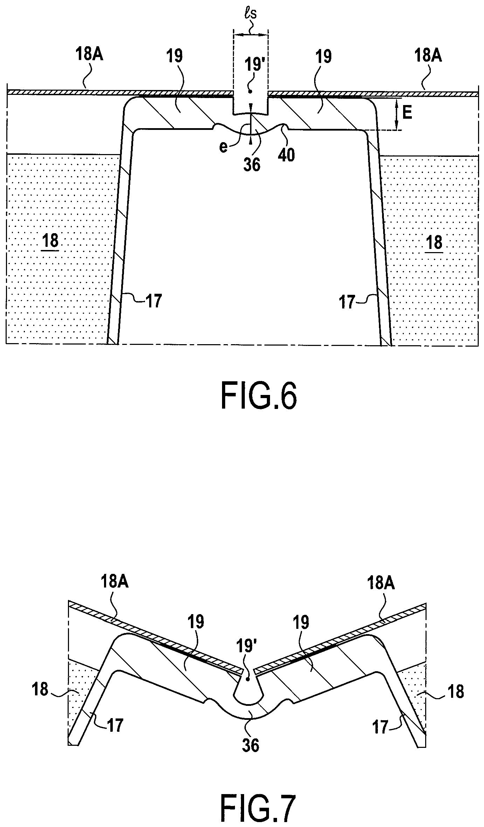

Sur la figure 6, on voit la région d'un point de soudure entre les rebords respectifs 19 de ces récipients. On voit que le point de soudure 36 s'étend seulement sur une partie de l'épaisseur E des rebords 19. Ainsi, l'épaisseur e du point de soudure 36 peut être de l'ordre de 2 à 4/10^{ème} de millimètres, pour une épaisseur E de l'ordre de 1 mm. Sur la figure 6, pour une meilleure compréhension, la largeur ls de la ligne de séparation 19' est volontairement exagérée. Cette différence d'épaisseur peut être obtenue en choisissant convenablement la température à laquelle les électrodes portent la matière et la durée d'exposition à cette température.

Ainsi qu'il a été indiqué, les points de soudure sont avantageusement réalisés par les électrodes. Ainsi, la soudure est avantageusement réalisée par fusion locale de la matière plastique, sans apport de matière extérieure. D'ailleurs, sur la figure 6, on voit des traces 40 de fluage de la matière dues à cette fusion locale.

Sur la figure 7, les deux récipients 18 sont en cours de séparation. Pour cela, on les plie l'un vers l'autre selon la ligne de séparation 19'. Ce pliage se fait naturellement dans le sens allant en rapprochant l'un de l'autre les couvercles respectifs 18A de ces récipients 18. Lors de ce mouvement, le point de soudure 36 est soumis à des contraintes de traction très importantes, d'autant que les arêtes des tronçons des rebords en regard peuvent se toucher, ce qui peut produire un effet de levier. Sous l'effet de ces contraintes de traction, étant rappelé que l'épaisseur des points de soudure est faible et que leurs dimensions générales sont faibles, la matière constituant ces points de soudure se rompt, de sorte que les récipients peuvent être séparés.

La matière plastique dans laquelle les récipients sont thermoformés est avantageusement du polypropylène, cette matière offrant une bonne protection pour le contenu des récipients (il offre une barrière à la vapeur d'eau supérieure à celle du polystyrène) et pouvant se recycler facilement. De plus, le coût du polypropylène est inférieur à celui du polystyrène. Cependant, contrairement au polystyrène, le polypropylène n'a pas tendance à se rompre sous l'effet du pliage. Grâce à l'invention, en réalisant des points de soudure localisés ainsi qu'il a été décrit, on permet cependant de réaliser des récipients groupés avec, entre eux, des liaisons sécables permettant leur utilisation individuelle. En effet, les points de soudure étant ajoutés sur des récipients initialement séparés, les efforts en jeu ne sont pas seulement des efforts de pliage, mais aussi des efforts de traction, qui permettent la rupture attendue.

## Revendications

1. Procédé de formage, de remplissage et de scellage d'un groupe d'au moins deux récipients (18) en matière plastique, dans lequel, à partir d'une même feuille de matière plastique (10), on thermoforme des récipients ayant chacun un corps (17) et un rebord (19) qui délimite une ouverture (17A), on remplit les récipients, on ferme les récipients en posant des couvercles (18A) en travers de leurs ouvertures, et on sépare les récipients (18) en les découpant individuellement dans la feuille,
**caractérisé en ce que**, après avoir séparé les récipients, on dispose les récipients (18) adjacents de telle sorte que des tronçons de leurs rebords (19) respectifs soient en regard et délimitent entre eux une ligne de séparation (19') entre les récipients adjacents et on réalise, sur la ligne de séparation, au moins un point de soudure (36) formant une liaison sécable entre les tronçons de rebords en regard.

2. Procédé selon la revendication 1, **caractérisé en ce que**, le rebord (19) de chaque récipient (18) délimitant une ouverture (17A), on réalise ledit au moins un point de soudure (36) sur la ligne de séparation (19') entre les récipients adjacents, à partir des faces des rebords desdits récipients qui sont opposées à leurs ouvertures.

3. Procédé selon la revendication 1 ou 2, **caractérisé en ce qu'**on réalise au moins deux points de soudure (36) espacés sur la ligne de séparation.

4. Procédé selon l'une quelconque des revendications 1 à 3, **caractérisé en ce que** le point de soudure (36) s'étend sur une partie seulement de l'épaisseur (E) des rebords (19) en regard.

5. Procédé selon l'une quelconque des revendications 1 à 4, **caractérisé en ce que** le point de soudure (36) est réalisé par fusion locale de la matière plastique.

6. Procédé selon l'une quelconque des revendications 1 à 5, **caractérisé en ce que** la matière plastique comprend du polypropylène.

7. Procédé selon l'une quelconque des revendications 1 à 6, **caractérisé en ce que** les couvercles (18A) sont des opercules apposés sur les ouvertures (17A) des récipients (18) à partir d'une bande continue (23) et **en ce que** les opercules (18A) sont découpés lors de la séparation des récipients.

8. Installation de formage, de remplissage et de scellage de récipients, comprenant un poste de thermoformage (16) apte à thermoformer, à partir d'une feuille de matière plastique (10), des récipients (18) ayant chacun un corps (17) et un rebord (19) délimitant une ouverture (17A), ainsi qu'un convoyeur pour convoyer les récipients thermoformés par groupes d'au moins deux récipients adjacents liés par une partie de la feuille, un poste (20) de remplissage des récipients, un poste (22) de fermeture des récipients avec des couvercles (18A) et un poste de découpe (24) apte à découper les récipients individuellement dans ladite feuille pour les séparer, **caractérisée en ce qu'**elle comprend, en aval du poste de découpe des récipients dans le sens de convoyage des récipients, des moyens (28) pour disposer les récipients du groupe adjacents, de telle sorte que des tronçons de leurs rebords (19) respectifs soient en regard et délimitent entre eux une ligne de séparation (19') entre les récipients adjacents, et **en ce qu'**elle comprend un outil de soudure (34) apte à réaliser, sur la ligne de séparation (19'), au moins un point de soudure (36) formant une liaison sécable entre les rebords en regard.

9. Installation selon la revendication 8, **caractérisée en ce qu'**elle comprend au moins une électrode de soudure (34) et des moyens pour appliquer cette électrode aux faces des rebords (19) des récipients opposées à leurs ouvertures (17A).

10. Installation selon la revendication 9, **caractérisée en ce qu'**elle comprend au moins deux électrodes de soudure (34) espacées.

11. Installation selon l'une quelconque des revendications 8 à 10, **caractérisée en ce qu'**elle comprend des moyens (32, 38) pour maintenir les groupes de récipients séparés de telle sorte que, pour chaque groupe, les rebords (19) en regard des récipients (18) soient accessibles par leurs faces opposées aux ouvertures (17A) des récipients.

12. Installation selon l'une quelconque des revendications 8 à 11, **caractérisé en ce que** les couvercles (18A) sont des opercules apposés sur les ouvertures (17A) des récipients (18) à partir d'une bande continue (23) et **en ce que** le poste de découpe (24) est apte à découper les opercules lors de la séparation des récipients.

## Patentansprüche

1. Verfahren zum Formen, Füllen und Verschließen einer Gruppe von mindestens zwei Behältern (18) aus Kunststoff, bei dem aus einer selben Kunststofffolie (10) Behälter thermogeformt werden, die jeweils einen Körper (17) und einen Rand (19), der eine Öffnung (17A) begrenzt, haben, die Behälter gefüllt werden, die Behälter verschlossen werden, wobei Deckel (18A) durch ihre Öffnungen angebracht werden, und die Behälter (18) getrennt werden, wobei sie einzeln aus der Folie ausgeschnitten werden,
**dadurch gekennzeichnet, dass**, nachdem die Behälter getrennt wurden, die Behälter (18) aneinandergrenzend angeordnet werden, so dass Abschnitte ihrer jeweiligen Ränder (19) einander gegenüberliegen und zwischen sich eine Trennlinie (19') zwischen den aneinandergrenzenden Behältern begrenzen, und auf der Trennlinie mindestens ein Schweißpunkt (36) hergestellt wird, der eine trennbare Verbindung zwischen den einander gegenüberliegenden Randabschnitten bildet.

2. Verfahren gemäß Anspruch 1, **dadurch gekennzeichnet, dass**, wobei der Rand (19) jedes Behälters (18) eine Öffnung (17A) begrenzt, der mindestens eine Schweißpunkt (36) auf der Trennlinie (19') zwischen den aneinandergrenzenden Behältern von den Seiten der Ränder der Behälter aus, die ihren Öffnungen gegenüberliegen, hergestellt wird.

3. Verfahren gemäß Anspruch 1 oder 2, **dadurch gekennzeichnet, dass** mindestens zwei auf der Trennlinie beabstandete Schweißpunkte (36) hergestellt werden.

4. Verfahren gemäß einem der Ansprüche 1 bis 3, **dadurch gekennzeichnet, dass** sich der Schweißpunkt (36) nur auf einem Teil der Dicke (E) der einander gegenüberliegenden Ränder (19) erstreckt.

5. Verfahren nach einem der Ansprüche 1 bis 4, **dadurch gekennzeichnet, dass** der Schweißpunkt (36) durch lokales Schmelzen des Kunststoffes hergestellt wird.

6. Verfahren nach einem der Ansprüche 1 bis 5, **dadurch gekennzeichnet, dass** der Kunststoff Polypropylen umfasst.

7. Verfahren nach einem der Ansprüche 1 bis 6, **dadurch gekennzeichnet, dass** die Deckel (18A) Folien sind, die auf die Öffnungen (17A) der Behälter (18) aus einem kontinuierlichen Band (23) aufgebracht werden, und dass die Deckel (18A) bei der Trennung der Behälter ausgeschnitten werden.

8. Anlage zum Formen, Füllen und Verschließen von Behältern (18), umfassend eine Thermoformstation (16), die geeignet ist, aus einer Kunststofffolie (10) Behälter (18) thermozuformen, die jeweils einen Körper (17) und einen Rand (19), der eine Öffnung (17A) begrenzt, haben, sowie einen Förderer, um die thermogeformten Behälter in Gruppen zu mindestens zwei aneinandergrenzenden Behältern, die durch einen Teil der Folie verbunden sind, zu befördern, eine Station (20) zum Füllen der Behälter, eine Station (22) zum Verschließen der Behälter mit Deckeln (18A) und eine Station (24) zum Ausschneiden, die geeignet ist, die Behälter einzeln aus der Folie auszuschneiden, um sie zu trennen,
**dadurch gekennzeichnet, dass** sie stromabwärts zu der Station zum Ausschneiden der Behälter in Förderrichtung der Behälter Mittel (28) umfasst, um die Behälter der angrenzenden Gruppe derart anzuordnen, dass Abschnitte ihrer jeweiligen Ränder (19) einander gegenüberliegen und zwischen sich eine Trennlinie (19') zwischen den aneinandergrenzenden Behältern begrenzen, und dass sie ein Schweißwerkzeug (34) umfasst, das geeignet ist, auf der Trennlinie (19') mindestens einen Schweißpunkt (36) herzustellen, der eine trennbare Verbindung zwischen den gegenüberliegenden Rändern bildet.

9. Anlage nach Anspruch 8, **dadurch gekennzeichnet, dass** sie mindestens eine Schweißelektrode (34) und Mittel umfasst, um diese Elektrode an die Seiten der Ränder (19) der Behälter anzulegen, die ihren Öffnungen (17A) gegenüberliegen.

10. Anlage nach Anspruch 9, **dadurch gekennzeichnet, dass** sie mindestens zwei beabstandete Schweißelektroden (34) umfasst.

11. Anlage nach einem der Ansprüche 8 bis 10, **dadurch gekennzeichnet, dass** sie Mittel (32, 38) umfasst, um die Behältergruppen getrennt zu halten, so dass für jede Gruppe die gegenüberliegenden Ränder (19) der Behälter (18) über ihre den Öffnungen (71 A) der Behälter gegenüberliegenden Seiten zugänglich sind.

12. Anlage nach einem Ansprüche 8 bis 11, **dadurch gekennzeichnet, dass** die Deckel (18A) Folien sind, die auf die Öffnungen (17A) der Behälter (18) aus einem kontinuierlichen Band (23) aufgebracht werden, und dass die Schneidestation (24) geeignet ist, die Folien bei der Trennung der Behälter auszuschneiden.

## Claims

1. A method of forming, filling, and sealing a group of at least two containers (18) made of plastics material, which method consists in: thermoforming containers from the same sheet of plastics material (10), each of which containers has a body (17) and a rim (19) that defines an opening (17A); filling the containers; closing the containers by placing lids (18A) across their openings; and separating the containers (18) by cutting them out individually from the sheet;
said method being **characterized in that**, after the containers have been separated, the method further consists in: placing the containers (18) adjacent to one another in such a manner that segments of their respective rims (19) face each other and define between them a line of separation (19') between the adjacent containers; and, on the line of separation, forming at least one spot weld (36) forming a breakable connection between the facing rim segments.

2. A method according to claim 1, **characterized in that**, with the rim (19) of each container (18) defining an opening (17A), said at least one spot weld (36) is formed on the line of separation (19') between the adjacent containers, from those faces of the rims of said containers that face in the direction that is opposite from the direction in which their openings face.

3. A method according to claim 1, **characterized in that** at least two spot welds (36) are formed in spaced-apart manner on the line of separation.

4. A method according to of claim 1, **characterized in that** the spot weld (36) extends over only a fraction of the thickness (E) of the facing rims (19).

5. A method according to claim 1, **characterized in that** the spot weld (36) is formed by locally melting the plastics material.

6. A method according to claim 1, **characterized in that** the plastics material comprises polypropylene.

7. A method according to any one of claims 1 to 6, **characterized in that** the lids (18A) are membrane seals placed over the openings (17A) of the containers (18) in a continuous strip (23), and **in that** the seals (18A) are cut out while the containers are being separated.

8. An installation for forming, filling, and sealing containers, which installation comprises a thermoforming station (16) suitable for thermoforming containers (18) from a sheet of plastics material (10), each of which containers has a body (17) and a rim (19) that defines an opening (17A), as well as a conveyor for conveying the thermoformed containers in groups of at least two adjacent containers connected together via a portion of the sheet, a filling station (20) for filling the containers, a sealing station (22) for closing the containers with lids (18A) and a cutting station (24) suitable for cutting out the containers individually from said sheet so as to separate them,
said installation being **characterized in that**, downstream from the container cutting station in the direction in which the containers are conveyed, it further comprises means (28) for placing the adjacent containers of the group in such a manner that segments of their respective rims (19) face each other and define between them a line of separation (19') between the adjacent containers, and **in that** it further comprises a welding tool (34) suitable for forming at least one spot weld (36) forming a breakable connection between the facing rims on the line of separation (19').

9. An installation according to claim 8, **characterized in that** it has at least one welding electrode (34) and means for applying said electrode against those faces of the rims (19) of the containers that face in the direction opposite from the direction in which their openings (17A) face.

10. An installation according to claim 9, **characterized in that** it has at least two welding electrodes (34) that are spaced apart.

11. An installation according to any one of claims 8 to 10, **characterized in that** it has means (32, 38) for maintaining the groups of containers separate in such a manner that, for each group, the facing rims (19) of the containers (18) are accessible via their faces that face in the direction opposite from the direction in which the openings (17A) of the containers face.

12. An installation according to any one of claims 8 to 10, **characterized in that** the lids (18A) are membrane seals placed over the openings (17A) of the containers (18) in a continuous strip (23), and **in that** the cutting station (24) is suitable for cutting out the seals while the containers are being separated.
